# EUROPEAN PATENT APPLICATION

(11) **EP 3 838 852 A1**
(43) Date of publication of application: **23.06.2021**
(21) Application number: 19850493.8
(22) Date of filing: 23.07.2019
(51) Int. Cl.: C03B 17/06

(54) **PLATE GLASS PRODUCTION APPARATUS, AND MOLDING MEMBER FOR USE IN PLATE GLASS PRODUCTION APPARATUS**

(30) Priority: 13.08.2018 JP 2018152489
(71) Applicant: AGC INC., Chiyoda-ku, Tokyo 1008405 (JP)
(72) Inventor: NAKANO, Masanori, Tokyo 100-8405 (JP)
(74) Representative: Müller-Boré & Partner Patentanwälte PartG mbB
(86) International application number: PCT/JP2019/028857
(87) International publication number: WO 2020/036045

(57) **Abstract**

A production apparatus that continuously produces plate glass, includes a molding member configured to mold molten glass to form a glass ribbon, wherein the molding member is (i) constituted with graphite or includes a portion constituted with graphite, and/or (ii) supported by a support member containing graphite, wherein in a case of (i), the molding member is surrounded by a fence, and in a case of (ii), the support member is surrounded by the fence together with the molding member, and wherein a space surrounded by the fence is adjusted to have an oxygen concentration of less than or equal to 100 ppm.

## Description

### [Technical Field]

The present invention relates to a plate glass production apparatus and a molding member used in the plate glass production apparatus.

### [Background Art]

As a type of continuous production method of plate glass, the so-called fusion process has been known (e.g., Patent Document 1).

In this method, molten glass obtained by melting raw materials for glass is supplied to an upper end of a member for molding (hereafter, referred to as a "molding member"). The molding member is virtually wedge-shaped and pointed downward in cross section, and the molten glass flows down along two facing side surfaces of this molding member. The molten glass flowing down along both side surfaces is joined and integrated at a lower-side edge portion of the molding member (also referred to as the "confluence point") to form a glass ribbon. Thereafter, the glass ribbon is drawn downward by traction members such as rollers while being slowly cooled down, and cut to have predetermined dimensions.

### [Related art documents]

### [Patent Documents]

Patent Document 1: Japanese Laid-Open Patent Application No. 2016-028005

### [Summary of Invention]

### [Problem to be Solved by the Invention]

In the fusion process, the molding member has an elongated shape in which the side surfaces and the confluence point extend along the horizontal axis. Also, the dimension in this horizontal axis direction (hereafter, referred to as the "longitudinal direction") corresponds to the width direction of the plate glass; therefore, in the case where the width of the plate glass to be produced needs to be increased, the dimension needs to be set long enough.

Due to such constraints on the configuration and the use environment, if using the molding member for a long time, problems may arise such that the molding member is deformed by high temperature creep, and bends in the direction of gravity. Also, if such deformation occurs in the molding member, it causes problems in that the dimensional precision of the produced plate glass is reduced, and in particular, the thickness becomes uneven.

Therefore, molding members used in continuous production apparatuses of plate glass, with which such creep problems can be alleviated, are desired even now.

The present invention is made in view of such background, and the present invention has an object to provide a plate glass production apparatus, with which the creep problems are alleviated significantly. Also, the present invention has an object to provide a molding member for such a plate glass production apparatus.

### [Means for Solving Problems]

According to the present invention, a production apparatus that continuously produces plate glass is provided that includes a molding member configured to mold molten glass to form a glass ribbon, wherein the molding member is (i) constituted with graphite or includes a portion constituted with graphite, and/or (ii) supported by a support member containing graphite, wherein in a case of (i), the molding member is surrounded by a fence, and in a case of (ii), the support member is surrounded by the fence together with the molding member, and wherein a space surrounded by the fence is adjusted to have an oxygen concentration of less than or equal to 100 ppm.

Also, according to the present invention, a molding member is provided for a production apparatus that continuously produces plate glass, wherein the molding member is (i) constituted with graphite or includes a portion constituted with graphite, and/or (ii) supported by a support member containing graphite, wherein in a case of (i), the molding member is surrounded by a fence, and in a case of (ii), the support member is surrounded by the fence together with the molding member, and wherein a space surrounded by the fence is adjusted to have an oxygen concentration of less than or equal to 100 ppm.

### [Effects of the Invention]

According to the present invention, a plate glass production apparatus can be provided, with which the creep problems are alleviated significantly. Also, according to the present invention, a molding member for such a plate glass production apparatus can be provided.

### [Brief Description of Drawings]

FIG. 1 is a schematic diagram illustrating an example of a configuration of a plate glass production apparatus according to an embodiment of the present invention;
FIG. 2 is an enlarged side view of a molding part in FIG. 1;
FIG. 3 is a schematic diagram illustrating the cross section and peripheral members in a direction perpendicular to the longitudinal direction of the molding member illustrated in FIG. 2;
FIG. 4 is a schematic diagram illustrating part of a configuration of another plate glass production apparatus according to an embodiment of the present invention; and
FIG. 5 is a schematic diagram illustrating part of a configuration of yet another plate glass production apparatus according to an embodiment of the present invention.

### [Mode for Carrying Out the Invention]

In the following, embodiments according to the present invention will be described with reference to the drawings.

### (Plate glass production apparatus according to an embodiment of the present invention)

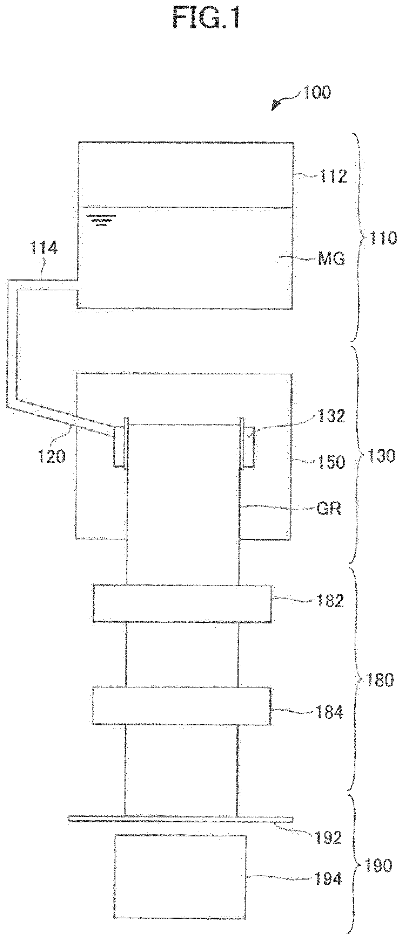

With reference to FIGs. 1 to 3, a plate glass production apparatus according to an embodiment of the present invention will be described.

FIG. 1 schematically illustrates a configuration of a plate glass production apparatus 100 according to an embodiment of the present invention (hereafter, referred to as the "first production apparatus"). The first production apparatus 100 can continuously produce plate glass by the fusion process.

As illustrated in FIG. 1, the first production apparatus 100 includes, from the upstream side, a melting part 110, a molding part 130, a slow cooling part 180, and a cutting part 190.

The melting part 110 is a place in the first production apparatus 100 that has a function of melting raw materials for glass, to form molten glass MG. The molding part 130 is a place that has a function of molding the molten glass MG supplied from the melting part 110, to form a glass ribbon GR. The slow cooling part 180 is a place that has a function of slowly cooling down the glass ribbon GR formed in the molding part 130. Also, the cutting part 190 is a place that has a function of cutting the slowly-cooled glass ribbon GR.

Note that in the first production apparatus 100 illustrated in FIG. 1, the boundaries between the parts are set for the sake of convenience, and not defined strictly. For example, a member such as a pipe or the like to supply the molten glass MG to the molding part 130 may be included in the melting part 110, or may be included in the molding part 130.

As illustrated in FIG. 1, the melting part 110 includes a melting furnace 112 in which the raw materials for glass is melted. The melting furnace 112 includes an outlet 114, and from the outlet 114, the molten glass MG is discharged. Note that although not illustrated in FIG. 1, the melting part 110 may further include a clearing part to remove air bubbles from the molten glass, and/or a mixing part to uniformly mix the molten glass.

The molten glass MG discharged from the outlet 114 of the melting furnace 112 is then introduced into the molding part 130 through an inlet 120. The molding part 130 includes a molding member 132 that molds the glass ribbon GR from the molten glass MG by the fusion process. Also, the molding part 130 may include rollers (not illustrated).

Note that the molding part 130 will be described in detail later.

The glass ribbon GR molded in the molding part 130 is then introduced into the slow cooling part 180. One pair or two or more pairs of cooling rollers are arranged in the slow cooling part 180.

For example, in the example illustrated in FIG. 1, the slow cooling part 180 includes two pairs of cooling rollers. The first pair of cooling rollers is constituted with two cooling rollers 182, and the second pair of cooling rollers is constituted with two other cooling rollers 184. By rotating the cooling rollers 182 and 184 in a state of having the glass ribbon GR sandwiched in-between, the glass ribbon GR is towed downward. Also, the cooling rollers 182 and 184 are controlled to have predetermined temperatures, respectively, so as to be capable of cooling the glass ribbon GR.

Thereafter, the sufficiently and slowly cooled glass ribbon GR is conveyed to the cutting part 190. The cutting part 190 includes a cutting means 192, such as a cutter, by which the glass ribbon GR is cut to have predetermined dimensions.

The first production apparatus 100 can continuously produce plate glass 194 through the above steps.

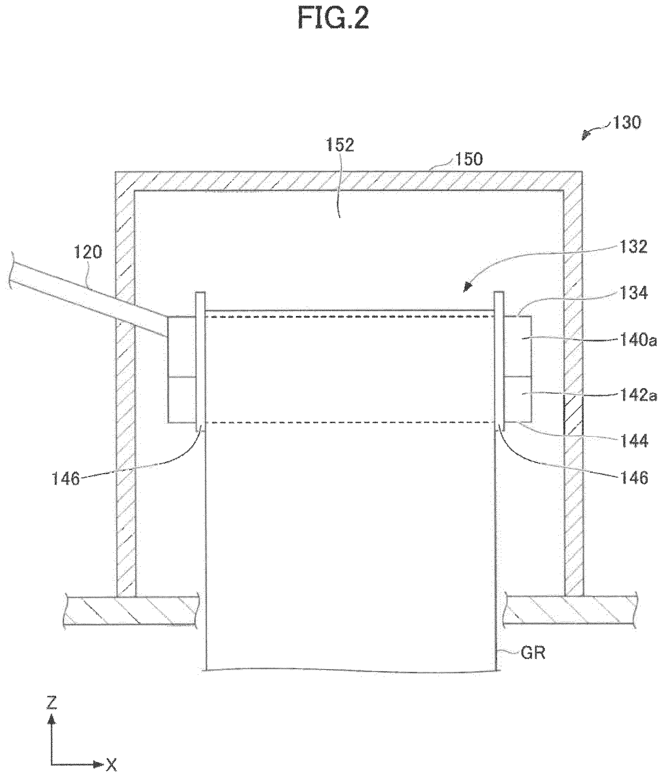

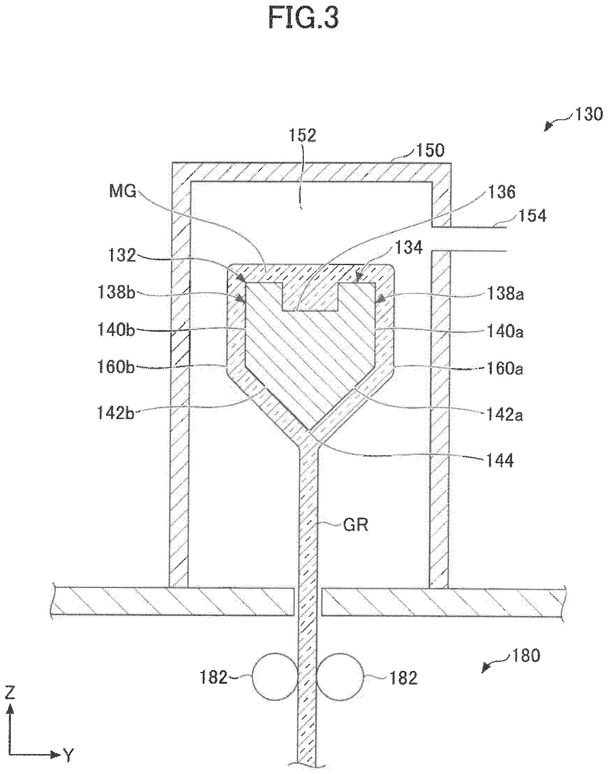

FIGs. 2 and 3 illustrate enlarged views of the molding part 130 of the first production apparatus 100. FIG. 2 schematically illustrates a side view of the molding member 132 while molding the glass ribbon GR as viewed from one side. Also, FIG. 3 schematically illustrates a cross section perpendicular to the longitudinal direction (the X direction) of the molding member 132 illustrated in FIG. 2. Note that these figures also illustrate members and the like included in the surroundings of the molding member 132.

As illustrated in FIGs. 2 and 3, the molding member 132 has virtually a wedge-like shape in cross section.

More specifically, the molding member 132 has a top surface 134, and a first side surface 138a and a second side surface 138b that face each other.

A recess part 136 whose top side is open along the longitudinal direction (the X direction) is formed in the top surface 134. The first side surface 138a includes a first upper side surface 140a and a first lower side surface 142a. Similarly, the second side surface 138b includes a second upper side surface 140b and a second lower side surface 142b. Both the first upper side surface 140a and the second upper side surface 140b extend virtually in the longitudinal axis direction (the X direction) and virtually in the vertical direction (the Z direction), and consequently, are arranged virtually parallel to the XZ plane. On the other hand, the first lower side surface 142a and the second lower side surface 142b are tilted with respect to the vertical direction (the Z direction), and are arranged so as to intersect each other at the lower-side edge portion (side) 144 of the molding member 132.

The upper end of the first lower side surface 142a is connected to the lower end of the first upper side surface 140a, and the upper end of the second lower side surface 142b is connected to the lower end of the second upper side surface 140b.

As illustrated in FIG. 2, the molding member 132 further includes a pair of cap members 146. The cap members 146 are arranged in the vicinity of the respective ends of the molding member 132 in the longitudinal direction (the X direction). The cap member 146 is used for fitting the glass ribbon GR into a predetermined width, namely, used as a stopper to prevent the glass ribbon GR from spreading beyond the predetermined width.

Also, a fence 150 is provided around the molding member 132, and the surroundings of the molding member 132 is covered by this fence. In other words, the fence 150 forms a space 152 around the molding member 132. However, as is clear from FIG. 3, the fence 150 has a removed portion, through which the glass ribbon GR is discharged toward the slow cooling part 180. Therefore, the glass ribbon GR formed in the molding part 130 can be moved to the slow cooling part 180 without interfered by the fence 150.

Note that in FIGs. 2 and 3, for the sake of clarification, the fence 150 is presented in a state of having a surface removed that is on the foreground side with respect to the paper.

During operation of the first production apparatus 100, the space 152 is controlled to have an oxygen concentration of less than or equal to 100 ppm. Also, in order to make this possible, a gas inlet 154 is provided at a predetermined position on the fence 150. An open/close valve may be provided in the gas inlet 154. Also, if necessary, the fence 150 may also be further provided with a gas outlet (not illustrated).

The oxygen concentration of the space 152 can be controlled within the predetermined range described earlier, by supplying gas having a predetermined composition from the gas inlet 154, or exhausting the gas from the gas outlet.

Next, a process of forming the glass ribbon GR by the molding member 132 will be described.

First, the space 152 inside the fence 150 is controlled to have a predetermined oxygen concentration. The oxygen concentration is less than or equal to 100 ppm, and favorably less than or equal to 50 ppm. For example, the space 152 may be adjusted to have the predetermined oxygen concentration by supplying an inert gas or a reducing gas from the gas inlet 154 of the fence 150.

Next, as described earlier, the molten glass MG is supplied to the molding part 130 through the inlet 120. The supplied molten glass MG is introduced into the top surface 134 of the molding member 132.

The top surface 134 has the recess part 136 formed as described earlier, in which the molten glass MG can be contained. However, when the molten glass MG is supplied in excess of the containable capacity of the recess part 136, the excess molten glass MG overflows along the first side surface 138a and the second side surface 138b of the molding member 132, and flows out downward.

Accordingly, a first molten glass portion 160a is formed on the first upper side surface 140a of the molding member 132, and a second molten glass portion 160b is formed on the second upper side surface 140b of the molding member 132.

Thereafter, the first molten glass portion 160a flows further downward along the first lower side surface 142a of the molding member 132. Similarly, the second molten glass portion 160b flows further downward along the second lower side surface 142b of the molding member 132.

As a result, the first molten glass portion 160a and the second molten glass portion 160b reach the lower-side edge portion 144, at which these portions are integrated. Accordingly, the glass ribbon GR is formed.

Note that thereafter, as described earlier, the glass ribbon GR is further drawn out in the vertical direction, and supplied to the slow cooling part 180.

Here, in a conventional plate glass production apparatus, if using the molding member for a long time, problems may arise such that the molding member is deformed by high temperature creep, and bends in the direction of gravity (the Z direction). When such a bend occurs in the molding member, the amount of molten glass MG flowing out of the top surface side of the molding member becomes non-uniform along the longitudinal direction (the X direction), and thereby, a problem may arise in that the dimensional precision of the plate glass to be produced, and in particular, the thickness precision is reduced.

However, in the first production apparatus 100, the molding member 132 has a feature of being constituted with graphite.

Graphite has relatively good creep resistance at high temperatures exceeding 1000 °C. Therefore, in the case of forming the molding member 132 with graphite, the conventional problem of deformation by creep can be suppressed significantly.

However, graphite tends to be oxidized in a high-temperature oxygen-containing environment, and once oxidized, the surface smoothness tends to decrease and the surface tends to degrade. Putting it the other way around, these properties have prevented graphite from being used in the molding member 132.

However, in the molding part 130 in the first production apparatus 100, the molding member 132 is covered with the fence 150, and the interior space 152 is controlled to be a "low oxygen environment" with an oxygen concentration of less than or equal to 100 ppm. Therefore, in the first production apparatus 100, even when graphite is used for the molding member 132, the molding member 132 can be prevented from degrading due to oxidation.

As a result, in the first production apparatus 100, creep is unlikely to occur in the molding member 132, and deformation and bends of the molding member 132 can be suppressed significantly.

Also, accordingly, even after the first production apparatus 100 would have been used for a long period of time, the dimensions of produced plate glass can be maintained with high precision.

Further, graphite has a heat resistance temperature of higher than or equal to 2000 °C, and thus, has a good heat resistance. Further, graphite is strong against thermal shock, and has a feature of hardly breaking even if the temperature of the molding member 132 changes steeply. Further, graphite is easy to process, and has a feature that a smooth plane can be obtained relatively easily.

Such features allow the molding member 132 constituted with graphite to be used stably for a long time, even at high temperatures such as, for example, 1200 °C.

As the member constituted with graphite according to the present invention, a material obtained from raw materials for graphite by cold isostatic press molding, extrusion molding, or press molding; a carbon-carbon composite obtained by calcining and carbonizing a composite material of graphite fiber and resin; and the like may be enumerated.

Note that it is undesirable for some types of glass to come into contact with graphite. In such a case, portions of the molding member 132 that come contact with the molten glass MG (including the first molten glass portion 160a and the second molten glass portion 160b) and/or the glass ribbon GR may be covered or coated with a material that does not react with the glass.

Here, the molding member 132 does not need to be constituted with graphite entirely. In other words, part of the molding member 132 may be constituted with graphite. In other words, graphite may be used in a way such that the creep resistance characteristic of the molding member 132 is improved. For example, graphite may be applied at a position where the creep resistance characteristic of the molding member 132 is likely to be improved, and/or in a shape with which the creep resistance characteristic of the molding member 132 is likely to be improved.

In this case, in general, the volume ratio of graphite to the entire molding member 132 is greater than or equal to 50%, favorably greater than or equal to 60%, more favorably greater than or equal to 70%, and even more favorably greater than or equal to 80%.

For example, graphite may be applied to the molding member 132 as a core bar extending along the longitudinal direction (the X direction) from one end (or its vicinity) to the other end (or its vicinity) in the molding member 132.

Such a graphite core bar may satisfy Dc/H=0.5 to 0.8, where Dc represents the diameter, and H represents the height of the molding member 132 (a distance from the top surface 134 to the lower-side edge portion 144).

Also, in the case where part of the molding member 132 is constituted with graphite, for the reason described earlier, portions of the molding member 132 that come into contact with the molten glass MG and/or the glass ribbon GR may be constituted with a material other than graphite. Alternatively, the contacting portions may be covered or coated with a material that does not react with glass.

Also, conversely, in the molding member 132, the top surface 134 may be constituted with graphite. As described earlier, in the case where the top surface 134 is constituted with graphite, processing is relatively easy, and hence, the top surface 134 can be formed to be relatively smooth. Therefore,
in this case, the distribution of the molten glass MG flowing out of the top surface 134 can be made uniform, and the dimensional precision can be increased for the plate glass 194 to be obtained finally.

Note that in this case, the molten glass MG comes into contact with graphite. However, even if both come into contact, as long as the contact lasts for a short period of time, the problem of graphite-derived components being mixed into the plate glass 194 is considered not to be noticeable significantly.

As above, with reference to FIGs. 1 to 3, the configuration and features of the first production apparatus 100 have been described. However, the configuration described above is merely an example, and it is apparent that the first production apparatus 100 may have other configurations.

For example, in the example illustrated in FIGs. 1 to 3, in the first production apparatus 100, the cooling rollers 182 and 184 of the slow cooling part 180 are arranged downstream of the fence 150 covering the molding member 132. However, the cooling rollers 182 and 184 of the slow cooling part 180 may be included in the fence 150. In other words, at least part of the slow cooling part 180 may be included in the fence 150, to partially execute the slow cooling down of the glass ribbon GR in the fence 150.

For example, if at least part of the slow cooling part 180 is included in the fence, the viscosity of the glass ribbon GR discharged from the fence 150 may be greater than or equal to 10¹³ poise. In this case, an advantage is obtained that the slow cooling of the glass ribbon can be executed relatively easily.

### (Another plate glass production apparatus according to an embodiment of the present invention)

The first production apparatus 100 including the molding member 132 described earlier is an apparatus that produces plate glass by the fusion process. However, the plate glass production apparatus, in particular, the molding member to which the present invention can be applied is not limited as such. The present invention can also be applied to plate glass production apparatuses using other production methods, and to molding members used in such production apparatuses.

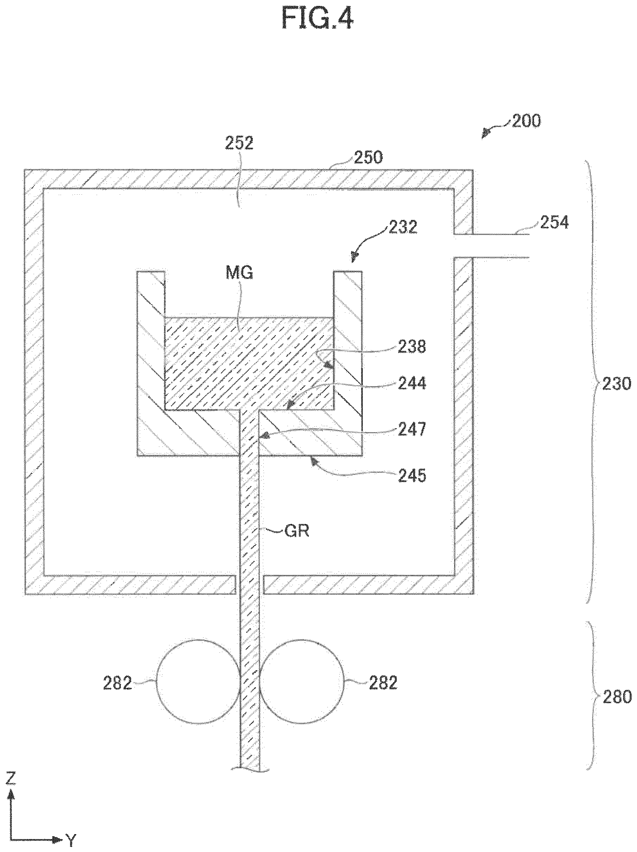

Thereupon, next, with reference to FIG. 4, another plate glass production apparatus according to an embodiment of the present invention will be described.

FIG. 4 schematically illustrates part of another plate glass production apparatus 200 according to an embodiment of the present invention (hereafter, referred to as the "second production apparatus"). The second production apparatus 200 is an apparatus that produces plate glass by the so-called slit molding process (down-draw process).

As illustrated in FIG. 4, the second production apparatus 200 includes a molding part 230, a slow cooling part 280, and a cutting part (not illustrated).

Note that although the example illustrated in FIG. 4 does not illustrate a melting part to form an molten glass MG, in the second production apparatus 200, a melting part may be provided upstream of the molding part 230. Alternatively, the molten glass MG may be formed in the molding part 230. In this case, the melting part is omitted.

The molding part 230 has a molding member 232 arranged. The molding part 230 may further have rollers arranged (not illustrated). Also, the slow cooling part 280 has at least one pair of cooling rollers 282 arranged.

The molding member 232 includes an internal side surface 238, an internal bottom surface 244, and an external bottom surface 245. The molding member 232 can contain the molten glass MG in an interior compartmentalized by the internal side surface 238 and the internal bottom surface 244. A slit 247 is formed to penetrate both from the internal bottom surface 244 to the external bottom surface 245.

Note that although not apparent from FIG. 4, each part of the molding member 232 extends in a direction perpendicular to the plane of the paper. Therefore, the molding member 232 illustrated in FIG. 4 has an elongated shape along the longitudinal direction (assumed to be the X direction).

The molding member 232 is constituted with graphite.

Also, a fence 250 is provided around the molding member 232, and the surroundings of the molding member 232 is covered by the fence 250. In other words, the fence 250 forms a space 252 around the molding member 232. However, as is clear from FIG. 4, the fence 250 has a removed portion, through which the glass ribbon GR is discharged toward the slow cooling part 280. Therefore, the glass ribbon GR formed in the molding part 230 can be moved to the slow cooling part 280 without being interfered by the fence 250.

During operation of the second production apparatus 200, the space 252 is controlled to have an oxygen concentration of less than or equal to 100 ppm. Also, in order to make this possible, a gas inlet 254 is provided at a predetermined position on the fence 250. An open/close valve may be provided in the gas inlet 254. Also, if necessary, the fence 250 may also be further provided with a gas outlet (not illustrated).

The oxygen concentration of the space 252 can be controlled within the range described earlier, by supplying gas having a predetermined composition from the gas inlet 254, or exhausting the gas from the gas outlet.

In the case of producing plate glass using the second production apparatus 200 as such, first, raw materials for glass is melted in a melting part (not illustrated), to form the molten glass MG. Also, the molten glass MG is supplied to the molding member 232 of the molding part 230.

Alternatively, as described earlier, in the case where there is no melting part, the molten glass MG may be produced from the raw materials for glass in the molding member 232 of the molding part 230.

Next, the molten glass MG supplied to the molding member 232 or produced in the molding member 232 flows out downward through the slit 247 of the molding member 232. At this time, the shape (thickness) of the molten glass MG is adjusted, to form a glass ribbon GR.

Thereafter, the glass ribbon GR is towed downward by rollers arranged in the molding part 230 (not illustrated) and cooling rollers 282, and supplied to the slow cooling part 280. In the slow cooling part 280, the glass ribbon GR is slowly cooled down to a predetermined temperature.

Thereafter, the slowly-cooled glass ribbon GR is supplied to a cutting part (not illustrated), and cut into predetermined dimensions. Accordingly, the plate glass is produced.

In the second production apparatus 200, the molding member 232 is constituted with graphite. Therefore, in the second production apparatus 200, the conventional problem of deformation by creep can be suppressed significantly.

Also, in the second production apparatus 200, the molding member 232 is covered with the fence 250, and the interior space 252 is controlled to be a low oxygen environment with an oxygen concentration of less than or equal to 100 ppm. Therefore, in the second production apparatus 200, even when graphite is used for the molding member 232, the molding member 232 can be prevented from degrading due to oxidation.

As a result, in the second production apparatus 200, creep is unlikely to occur in the molding member 232, and deformation and bends of the molding member 232 can be suppressed significantly.

Also, accordingly, even after the second production apparatus 200 would have been used for a long period of time, the dimensions of produced plate glass can be maintained with high precision.

Also in the second production apparatus 200, the molding member 232 does not need to be constituted with graphite entirely. In other words, part of the molding member 232 may be constituted with graphite. For example, graphite may be applied at a position where the creep resistance characteristic of the molding member 232 is likely to be improved, and/or in a shape with which the creep resistance characteristic of the molding member 232 is likely to be improved.

In this case, in general, the volume ratio of graphite to the entire molding member 232 is greater than or equal to 50%, favorably greater than or equal to 60%, more favorably greater than or equal to 70%, and even more favorably greater than or equal to 80%.

For example, graphite may be applied to the molding member 232 as a bottom surface material constituting the internal bottom surface 244 through the external bottom surface 245.

Also, as has been described with the first production apparatus 100, in the case where part of the molding member 232 is constituted with graphite, portions of the molding member 232 that come into contact with the molten glass MG and/or the glass ribbon GR may be constituted with a material other than graphite. This is to prevent the plate glass to be produced from containing graphite-derived components.

Alternatively, in the molding member 232, the part constituting the slit 247 may be constituted with graphite. As described earlier, graphite is relatively easy to process; therefore, in the case of constituting a portion corresponding to the slit 247 with graphite, the smooth slit 247 can be formed to be relatively smooth. Therefore, in this case, the distribution of the molten glass MG flowing out of the slit 247 can be made uniform, and the dimensional precision can be increased for the plate glass to be obtained finally.

Note that as described earlier, when the molten glass MG comes into contact with graphite, the problem of graphite-derived components mixed into the glass is considered not be noticeable significantly if the contact time is short.

Also in the second production apparatus 200, the cooling rollers 282 of the slow cooling part 280 may be contained in the interior of the fence 250 that covers the molding member 232. In other words, in the fence 250, at least part of the slow cooling down of the glass ribbon GR may be executed.

### (Yet another plate glass production apparatus according to an embodiment of the present invention)

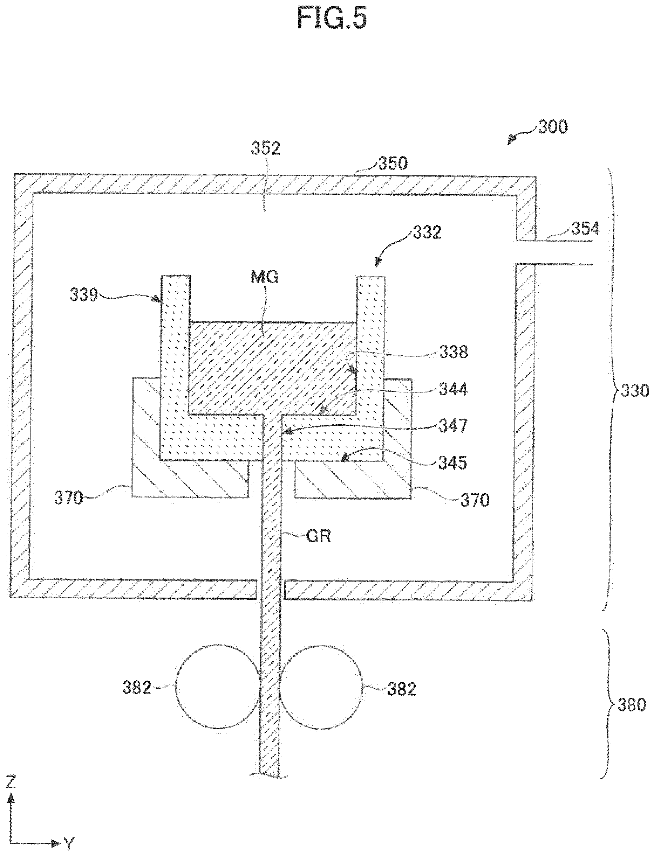

Next, with reference to FIG. 5, yet another plate glass production apparatus according to an embodiment of the present invention will be described.

FIG. 5 schematically illustrates part of yet another plate glass production apparatus 300 according to an embodiment of the present invention (hereafter, referred to as the "third production apparatus"). The third production apparatus 300 is an apparatus that produces plate glass by the so-called slit molding process (down-draw process).

As illustrated in FIG. 5, the third production apparatus 300 basically has substantially the same configuration as the second production apparatus 200 described earlier. Therefore, in the third production apparatus 300, each member that is substantially the same as the corresponding member used in the second production apparatus 200 is assigned a reference numerals obtained by adding 100 to the reference code of the corresponding member illustrated in FIG. 4. For example, the third production apparatus 300 includes a molding member 332, a fence 350, and a pair of cooling rollers 382, and the like.

However, the third production apparatus 300 further includes a support member 370, and in this regard, differs from the second production apparatus 200.

The support member 370 is arranged on the lower side of the molding member 332, so as to support the molding member 332. The support member 370 is arranged so as to contact (at least part of) an external side surface 339 and (at least part of) an external bottom surface 345 of the molding member 332.

The support member 370 is constituted with graphite. Alternatively, the support member 370 contains graphite.

The fence 350 is arranged around the molding member 332 and the support member 370, and by this fence 350, a space 352 is formed around the molding member 332 and the support member 370. However, as is clear from FIG. 5, the fence 350 has a removed portion, through which the glass ribbon GR is discharged toward the slow cooling part 380. Therefore, the glass ribbon GR formed in the molding part 330 can be moved to the slow cooling part 380 without interfered by the fence 350.

During operation of the third production apparatus 300, the space 352 is controlled to have an oxygen concentration of less than or equal to 100 ppm.

The production method of plate glass using the third production apparatus 300 as such is basically the same as in the case of the second production apparatus 200. Therefore, here, the detailed description is omitted.

In the third production apparatus 300, the molding member 332 is supported by the support member 370 containing graphite. Therefore, also in the third production apparatus 300, the problem of the molding member 332 deforming due to creep can be suppressed significantly.

Also, in the third production apparatus 300, the support member 370 is covered with the fence 350, and the interior space 352 is controlled to be a low oxygen environment with an oxygen concentration of less than or equal to 100 ppm. Therefore, in the third production apparatus 300, even when graphite is used for the support member 370, the support member 370 can be prevented from degrading due to oxidation.

As a result, in the third production apparatus 300, creep is unlikely to occur in the molding member 332, and deformation and bends of the molding member 332 can be suppressed significantly.

Also, accordingly, even after the third production apparatus 300 would have been used for a long period of time, the dimensions of produced plate glass can be maintained with high precision.

Also in the third production apparatus 300, the cooling rollers 382 of the slow cooling part 380 may be contained in the fence 350 that covers the molding member 332. In other words, in the fence 350, at least part of the slow cooling down step of the glass ribbon GR may be executed.

As above, the configurations and features according to the present invention have been described with reference to the first production apparatus 100 to the third production apparatus 300.

However, these are merely examples, and it is apparent that the present invention may have other configurations.

For example, in the third production apparatus 300, the molding member 332 is supported by the support member 370 containing graphite. In these configurations, further, the molding member 332 may be constituted with graphite, or may contain graphite.

In addition, it is apparent to those skilled in the art that various combinations and/or changes are conceivable.

The present application claims priority based on Japanese Patent Application No. 2018-152489, filed on August 13, 2018, the entire contents of which are hereby incorporated by reference.

### [Description of Symbols]

100 first production apparatus
110 melting part
112 melting furnace
114 outlet
120 inlet
130 molding part
132 molding member
134 top surface
136 recess part
138a first side surface
138b second side surface
140a first upper side surface
140b second upper side surface
142a first lower side surface
142b second lower side surface
144 lower-side edge portion
146 cap member
150 fence
152 space
154 gas inlet
160a first molten glass portion
160b second molten glass portion
180 slow cooling part
182 cooling roller
184 cooling roller
190 cutting part
192 cutting means
194 plate glass
200 second production apparatus
230 molding part
232 molding member
238 internal side surface
244 internal bottom surface
245 external bottom surface
247 slit
250 fence
252 space
254 gas inlet
280 slow cooling part
282 cooling roller
300 third production apparatus
330 molding part
332 molding member
338 internal side surface
339 external side surface
344 internal bottom surface
345 external bottom surface
347 slit
350 fence
352 space
354 gas inlet
370 support member
380 slow cooling part
382 cooling roller
GR glass ribbon
MG molten glass

## Claims

1. A production apparatus that continuously produces plate glass, the production apparatus comprising:
a molding member configured to mold molten glass to form a glass ribbon,
wherein the molding member is (i) constituted with graphite or includes a portion constituted with graphite, and/or (ii) supported by a support member containing graphite,
wherein in a case of (i), the molding member is surrounded by a fence, and in a case of (ii), the support member is surrounded by the fence together with the molding member, and
wherein a space surrounded by the fence is adjusted to have an oxygen concentration of less than or equal to 100 ppm.

2. The production apparatus of the plate glass as claimed in claim 1, wherein an inert gas or a reducing gas is supplied to the space.

3. The production apparatus of the plate glass as claimed in claim 1 or 2, wherein at least part of the molding member to come in contact with the molten glass is constituted with a material other than graphite.

4. The production apparatus of the plate glass as claimed in claim 1 or 2, wherein at least part of the molding member to come in contact with the molten glass is constituted with graphite.

5. The production apparatus of the plate glass as claimed in any one of claims 1 to 4, further comprising:
a slow cooling part configured to slowly cool down the glass ribbon.

6. The production apparatus of the plate glass as claimed in claim 5, wherein the slow cooling part is covered with the fence.

7. The production apparatus of the plate glass as claimed in any one of claims 1 to 6, wherein in the case of (i), the molding member has an elongated shape extending in a longitudinal direction, and has a wedge shape in cross section perpendicular to the longitudinal direction, and
wherein the molding member includes a core bar extending along the longitudinal direction, and the core bar is constituted with graphite.

8. The production apparatus of the plate glass as claimed in any one of claims 1 to 6, wherein in the case of (ii), the molding member includes an internal side surface, an external side surface facing the internal side surface, an internal bottom surface, and an external bottom surface facing the internal bottom surface, and the molten glass is contained in an interior enclosed by the interior side surface and the interior bottom surface,
wherein the molding member further includes a slit penetrating from the internal bottom surface to the external bottom surface, and
wherein the support member contacts at least part of the external side surface of the molding member, and at least part of the external bottom surface.

9. A molding member for a production apparatus that continuously produces plate glass, wherein the molding member is (i) constituted with graphite or includes a portion constituted with graphite, and/or (ii) supported by a support member containing graphite,
wherein in a case of (i), the molding member is surrounded by a fence, and in a case of (ii), the support member is surrounded by the fence together with the molding member, and
wherein a space surrounded by the fence is adjusted to have an oxygen concentration of less than or equal to 100 ppm.
